# FASCICULE DE BREVET EUROPEEN

(11) **EP 2 795 141 B1**
(45) Date de publication et mention de la délivrance du brevet: **07.12.2016**
(21) Numéro de dépôt: 12819080.8
(22) Date de dépôt: 18.12.2012
(51) Int. Cl.: F16B 7/00, F16B 19/10

(54) **SYSTEME PERMETTANT LA FIXATION D'UN OBJET SUR UN ELEMENT A RAINURE(S) DE FIXATION ET DISPOSITIF DE FIXATION POUR UN TEL SYSTEME**
SYSTEM ZUM BEFESTIGEN EINES OBJEKTS AN EINEM ELEMENT MIT BEFESTIGUNGSRILLE(N) UND BEFESTIGUNGSVORRICHTUNG FÜR EIN SOLCHES SYSTEM
SYSTEM ENABLING THE ATTACHMENT OF AN OBJECT TO AN ELEMENT HAVING ATTACHMENT GROOVE(S), AND ATTACHMENT DEVICE FOR SUCH A SYSTEM

(30) Priorité: 19.12.2011 FR 1161942
(43) Date de publication de la demande: 29.10.2014
(73) Titulaire: Tarifold (Societe par Actions Simplifiee), 67118 Geispolsheim (FR)
(72) Inventeur: DIETRICH, Claude, 67720 Weyersheim (FR)
(74) Mandataire: Nuss, Laurent
(86) Numéro de dépôt international: PCT/FR2012/052966
(87) Numéro de publication internationale: WO 2013/093321

(56) Documents cités:
- US-A- 5 628 581

## Description

La présente invention concerne le domaine des systèmes permettant la fixation d'un objet sur un élément à rainure(s) de fixation, plus particulièrement un profilé à rainure(s) de fixation, ce à partir d'un dispositif de fixation associé à des moyens de raccordement avec l'objet et adapté pour coopérer, en vue de réaliser la fixation, avec la ou l'une des rainures dudit élément et a pour objet un système permettant la fixation d'un objet sur un élément à rainure(s) de fixation. Elle a également pour objet un dispositif de fixation pour un tel système.

Les profilés à rainure(s) de fixation sont destinés à former des structures diverses telles que par exemple des bâtis de machines ou des cloisons et dont chaque rainure de fixation est adaptée pour permettre la fixation d'un objet, par exemple un accessoire, sur le profilé concerné, ce par l'intermédiaire d'un dispositif de fixation, généralement un boulon, fixé dans ladite rainure et associé à des moyens de raccordement avec l'objet.

Ce type de profilé est généralement réalisé en métal léger, plus particulièrement en aluminium, et se présente sous la forme d'un élément creux et allongé tel qu'une barre creuse de section transversale usuellement carrée ou rectangulaire ou mixte. Il comprend au moins une face rainurée sensiblement plane comprenant au moins une rainure de fixation, connue sous le nom de rainure en T, dont l'embouchure, s'ouvrant sur une échancrure pratiquée ou creusée dans ledit profilé, est délimitée longitudinalement par deux rebords en vis-à-vis comprenant chacun un angle saillant interne formé par deux faces internes sensiblement perpendiculaires entre elles à savoir une première face interne sensiblement parallèle à ladite face rainurée et s'étendant du côté du fond de la rainure et une seconde face interne s'étendant au niveau de l'embouchure de la rainure sensiblement perpendiculairement à ladite première face interne. La face externe de chaque rebord de la rainure affleure avec la face rainurée et est opposée à la première face interne.

La mise en place du boulon dans la rainure de fixation en T est généralement réalisée en engageant l'écrou par l'une des extrémités de la rainure de fixation et en le faisant glisser le long de cette dernière, grâce à la vis du boulon qui lui est solidaire et qui dépasse de la rainure à l'extérieur du profilé, jusqu'au point de fixation choisi le long de ladite rainure.

Le boulon est ensuite maintenu fixement au point de fixation choisi dans la rainure de fixation par serrage de l'écrou présentant une surface de serrage venant en appui de serrage, sous lesdits rebords, contre leur première face interne et de la tête de vis présentant une surface de serrage venant en appui contre la face externe desdits rebords et/ou contre la face rainurée.

L'objet est alors fixé sur le profilé grâce à une partie de raccordement intégrée ou non dans l'objet ou une pièce de raccordement fixée sur ce dernier, ladite pièce ou partie de raccordement comportant généralement un orifice permettant de visser la vis du boulon assujetti dans la rainure au point de fixation choisi.

Toutefois, si ces systèmes de fixation vis/écrou offrent une immobilisation solide du dispositif de fixation, la mise en place d'un écrou dans la rainure ou l'une des rainures de fixation d'un profilé pose plusieurs problèmes. Tout d'abord, il arrive fréquemment que les écrous tombent dans la rainure de fixation et ne puissent être récupérés. D'autre part, ce mode de fixation nécessite des outils spécifiques et, en général, la présence de deux personnes, l'une pour tenir le profilé et l'autre pour retenir le boulon au point de fixation choisi, le temps d'effectuer l'opération de serrage immobilisant ledit boulon au point de fixation choisi.

Le document US 5 628 581 B1 1 concerne un système de construction de tôles ou de feuilles métalliques dans lequel la feuille métallique est fixée à un montant support à l'aide d'au moins un rivet dont la base est adaptée pour permettre sa fixation dans une rainure pratiquée dans le montant support. Le rivet comprend deux pièces monoblocs coopérant entre elles pour fixer ce dernier dans la rainure, à savoir, d'une part, successivement et axialement, une première pièce comprenant une tête, un corps et une base de forme cylindrique coupée longitudinalement sur sa face latérale externe par deux plans parallèles créant deux côtés plats et latéraux et opposés et, d'autre part, une seconde pièce constituée par un axe. En outre, la base est coupée en deux dans sa longueur de sorte à former deux jambes. Un alésage central, destiné à recevoir l'axe, est pratiqué axialement dans le rivet à travers sa tête et une partie de la longueur de sa base jusqu'aux jambes. La rainure présente une embouchure étroite, délimitée par deux rebords en vis-à-vis, s'ouvrant dans une chambre de plus grande largeur et étant dimensionnée de sorte à pouvoir recevoir la base du rivet. L'extrémité de l'axe est effilée ou conique de sorte à permettre l'insertion de ce dernier entre les deux jambes en exerçant une pression sur ces dernières ayant pour effet de les déplacer latéralement vers l'extérieur contre l'arrête interne de l'un des deux bords de l'embouchure et sous ces derniers, empêchant l'extraction du rivet de la rainure

Toutefois, il arrive fréquemment, dans un système du type de celui décrit dans le document US 5 628 581 B1, que le rivet, qui est adapté pour être maintenu dans la rainure de sorte à empêcher son extraction de cette dernier, se déplace en glissant le long de la rainure. Un tel système ne permet pas un verrouillage efficace de ce dernier, et partant de l'objet à fixer, avec blocage en position le long de la rainure.

La présente invention a pour but de pallier ces inconvénients en proposant un système permettant la fixation d'un objet sur un élément à rainure(s) de fixation, plus particulièrement un profilé à rainure(s) de fixation, pouvant être mis en place aisément dans la ou l'une desdites rainures, ce notamment par une seule personne, directement en un point de fixation quelconque le long de la rainure de fixation concernée, ce tout en assurant un verrouillage avec blocage de l'objet efficace maintenant l'objet à l'état de fixation sur le profilé et évitant tout déplacement ou glissement de ce dernier le long de la rainure concernée du profilé.

A cet effet, le système selon la présente invention a pour objet un système permettant la fixation d'un objet sur un élément à rainure(s) de fixation présentant au moins une face rainurée comprenant au moins une rainure de fixation, dont l'embouchure, s'ouvrant sur une échancrure pratiquée ou creusée dans ledit élément, est délimitée longitudinalement par deux rebords en vis-à-vis, ledit système comprenant un dispositif de fixation servant à la fixation de l'objet sur ledit élément, ledit élément et des moyens de raccordement avec l'objet associés audit dispositif, chaque rebord comprenant un angle saillant interne formé par deux faces internes, ledit dispositif comprenant un ensemble de serrage et des moyens de verrouillage aptes à être, au moins en partie, insérés dans ladite rainure directement en n'importe quel point de fixation le long de cette dernière, ledit ensemble, d'une part, comprenant une surface de serrage apte à venir, à l'état d'insertion, en butée, directement ou indirectement, contre ladite face rainurée et, d'autre part, étant au moins en partie déformable élastiquement ou plastiquement de sorte à former des moyens d'ancrage et de serrage issus de la déformation élastique ou plastique de la matière sous l'effet d'une sollicitation de pression exercée, à l'état d'insertion, par lesdits moyens de verrouillage sur ledit ensemble, lesdits moyens d'ancrage et de serrage étant aptes à venir s'ancrer sous lesdits rebords et/ou contre lesdits angles saillants internes de sorte à serrer lesdits rebords entre la surface de serrage et les moyens d'ancrage et de serrage pour assujettir ledit ensemble au point de fixation choisi, lesdits moyens de raccordement étant soit intégrés dans la pièce de serrage, soit rapportés en étant susceptibles d'être fixés sur ledit ensemble ou bloqués par serrage entre lesdites surface de serrage et face rainurée, l'ensemble de serrage consistant en une pièce de serrage monobloc et/ou lesdits moyens de verrouillage consistant en une pièce de verrouillage monobloc, et se caractérisant essentiellement en ce que l'angle saillant interne de chaque rebord est formé par une première face interne s'étendant, du côté du fond de la rainure, sensiblement parallèlement à ladite face rainurée et une seconde face interne s'étendant, au niveau de l'embouchure de la rainure, de préférence sensiblement perpendiculairement à ladite première face interne, et en ce que la pièce de serrage comprend deux faces de butée susceptibles de venir chacune, à l'état d'insertion, en butée, avec maintien en pression par ladite pièce de verrouillage contre la seconde face interne sous l'effet de ladite sollicitation, ce de façon à verrouiller la pièce de serrage et à empêcher, du fait du maintien en pression, son glissement le long de la rainure.

La présente invention a également pour objet un dispositif de fixation pour système permettant la fixation d'un objet sur un élément à rainure(s) de fixation se caractérisant essentiellement en ce qu'il consiste en un dispositif de fixation tel que défini dans le système selon la présente invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure la montre une vue en perspective d'un système, selon la présente invention, dans un mode de réalisation préférentiel et en phase de fixation du dispositif de fixation dans l'une des rainures de fixation d'un profilé à rainures de fixation, avec une pièce de raccordement rapportée,
- la figure 1b montre une vue en perspective du système représenté sur la figure la, à l'état fixation du dispositif de fixation dans la rainure de fixation concernée du profilé avec serrage et blocage de la pièce de raccordement contre la face rainurée correspondante dudit profilé,
- la figure 2a montre une vue en coupe transversale du dispositif de fixation, de la pièce de raccordement et du profilé représentés sur la figure 1a,
- la figure 2b montre une vue en coupe transversale du dispositif de fixation, de la pièce de raccordement et du profilé représentés sur la figure 1b,
- la figure 3 montre une vue de profil de la pièce de serrage du dispositif de fixation représenté sur la figure 1,
- la figure 4 montre une vue en perspective de la pièce de serrage représentée sur la figure 3,
- la figure 5 montre une vue en perspective de la pièce de serrage représentée sur la figure 4 selon une orientation renversée,
- la figure 6 montre une vue en perspective de la pièce de verrouillage du dispositif de fixation représenté sur la figure 1,
- la figure 7 montre une vue en perspective de la pièce de verrouillage représentée sur la figure 6 selon une orientation renversée,
- la figure 8 montre une vue en perspective de la pièce de serrage et des moyens de raccordement en forme de crochet intégrés dans ladite pièce,
- la figure 9 montre une vue en perspective du dispositif comprenant la pièce de serrage et les moyens de raccordement intégrés dans cette dernière représentés sur la figure 8,
- la figure 10 montre une vue en perspective d'un système, selon la présente invention en phase de fixation du dispositif de fixation dans l'une des rainures de fixation d'un profilé à rainures de fixation, avec une pièce de raccordement rapportée munie d'un crochet.

Les figures montrent un système permettant la fixation d'un objet sur un élément 1 à rainure(s) de fixation, plus particulièrement un profilé à rainure(s) de fixation, ledit élément présentant au moins une face rainurée 2, de préférence sensiblement plane, comprenant au moins une rainure 3, 4 de fixation, dont l'embouchure 3, s'ouvrant sur une échancrure 4 pratiquée ou creusée dans ledit profilé 1, est délimitée longitudinalement par deux rebords 5 en vis-à-vis, ledit système comprenant un dispositif de fixation 6, 7 servant à la fixation de l'objet, ledit élément 1 et des moyens de raccordement 6', 8 avec l'objet associés audit dispositif, chaque rebord 5 comprenant un angle saillant interne formé par deux faces internes 9 et 9', de préférence sensiblement perpendiculaires entre elles.

Conformément à la présente invention, ledit dispositif de fixation comprend un ensemble de serrage 6 et des moyens de verrouillage 7, lequel ensemble et lesquels moyens de verrouillage sont aptes à être, dans un état d'insertion, au moins en partie, insérés dans ladite rainure 3, 4 directement en n'importe quel point de fixation le long de cette dernière.

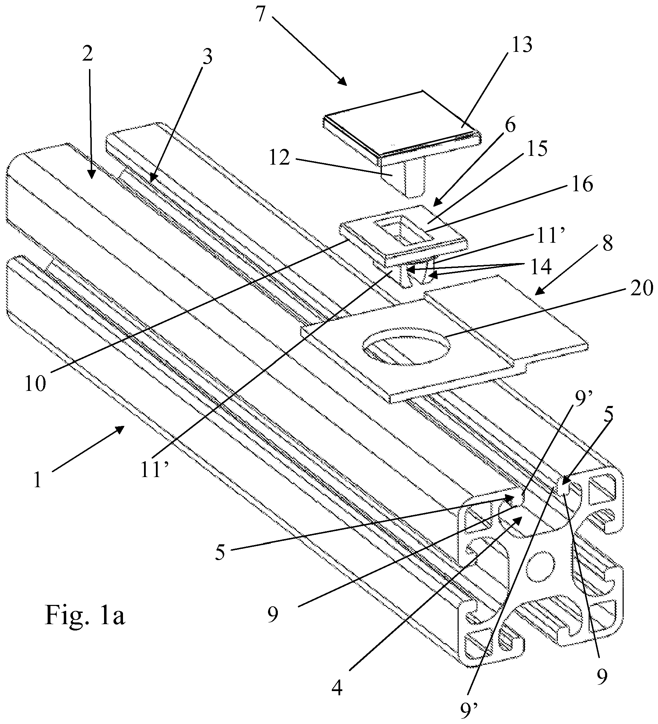

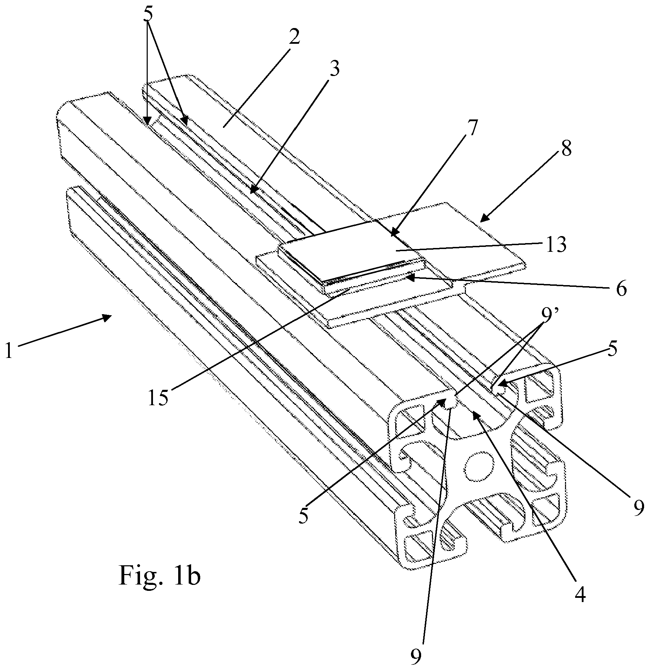

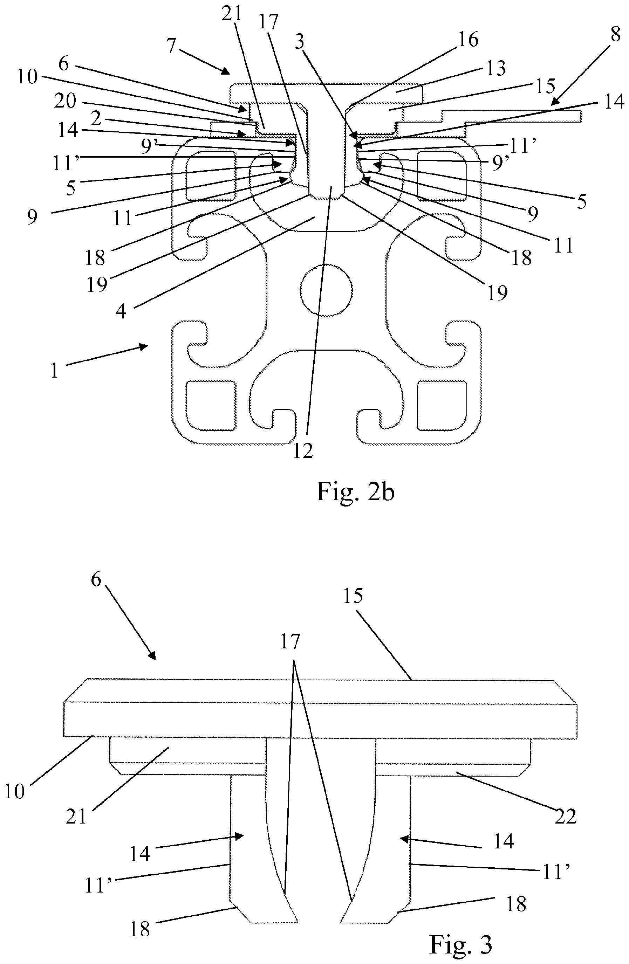

Toujours conformément à la présente invention, l'ensemble de serrage 6, d'une part, comprend une surface de serrage 10 apte à venir, en butée, directement ou indirectement, à l'état d'insertion, contre ladite face rainurée et, d'autre part, est au moins en partie déformable élastiquement ou plastiquement de sorte à former des moyens d'ancrage et de serrage 11 résultant de la déformation élastique ou plastique de la matière sous l'effet d'une sollicitation de pression exercée, à l'état d'insertion, par lesdits moyens de verrouillage 7 sur ledit ensemble, lesdits moyens d'ancrage et de serrage 11 étant aptes à venir s'ancrer sous lesdits rebords 5 et/ou contre les angles saillants internes de sorte à serrer les rebords 5 entre la surface de serrage 10 et les moyens d'ancrage et de serrage 11 pour assujettir ledit ensemble au point de fixation choisi (figures 1b et 2b).

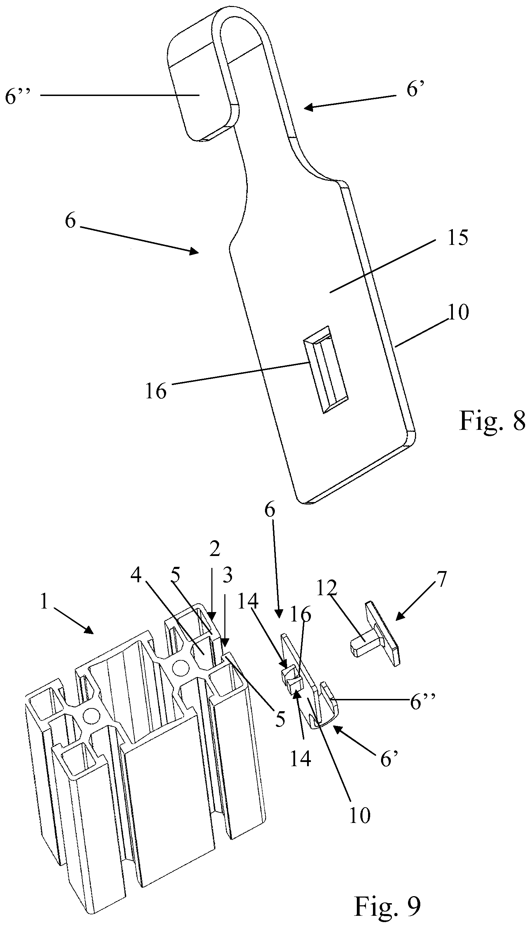

Toujours conformément à la présente invention, les moyens de raccordement 6', 8 sont soit intégrés dans l'ensemble de serrage 6 (figures 8 et 9), soit rapportés en étant susceptibles d'être fixés sur ledit ensemble ou bloqués par serrage entre lesdites surface de serrage et face rainurée 2 (figures la, 1b, 2a, 2b et 10).

Dans un mode de réalisation préférentiel, l'ensemble de serrage 6 peut consister en une pièce de serrage monobloc et/ou lesdits moyens de verrouillage 7 peuvent consister en une pièce de verrouillage monobloc.

De préférence, l'angle saillant interne de chaque rebord 5 peut être formé par une première face interne 9 s'étendant, du côté du fond de la rainure, sensiblement parallèlement à ladite face rainurée et une seconde face interne 9' s'étendant, au niveau de l'embouchure de la rainure, de préférence sensiblement perpendiculairement à ladite première face interne 9, et la pièce de serrage 6 peut comprendre en outre deux faces de butée 11' susceptibles de venir chacune, à l'état d'insertion, en butée contre la seconde face interne 9' de l'un des rebords 5.

En outre, la présente invention peut prévoir, de manière avantageuse, que les deux faces de butée 11' soient susceptibles de venir chacune, à l'état d'insertion, en butée avec maintien en pression par la pièce de verrouillage 7 contre la seconde face interne 9' de l'un des rebords 5, c'est-à-dire sous l'effet de la contrainte ou de la sollicitation exercée par ladite pièce de verrouillage 7, ce de façon à verrouiller plus efficacement la pièce de serrage et à empêcher, du fait du maintien en pression, notamment son glissement le long de la rainure.

Dans un mode de réalisation préférentiel de la pièce de verrouillage 7, celle-ci peut comprendre un élément de sollicitation et de verrouillage 12, de préférence rigide, par exemple en forme de doigt ou de plaque apte à assurer la contrainte de verrouillage, et, éventuellement, des moyens de préhension 13 de cette dernière.

Dans un mode de réalisation préférentiel de la pièce de serrage 6, celle-ci peut comprendre, d'une part, deux ailes ou pattes d'ancrage 14 flexibles espacées et situées sensiblement en regard l'une de l'autre et adaptées de sorte, à l'état d'insertion, à s'étendre sensiblement jusqu'au niveau ou au-delà des angles saillants desdits rebords 5 vers le fond de ladite rainure, chaque aile d'ancrage 14 étant au moins déformable élastiquement ou plastiquement à sa partie d'extrémité libre et, d'autre part, un chapeau 15 intégrant la surface de serrage 10 et supportant les ailes d'ancrage 14 qui peuvent, de préférence, s'étendre sensiblement perpendiculairement à cette dernière.

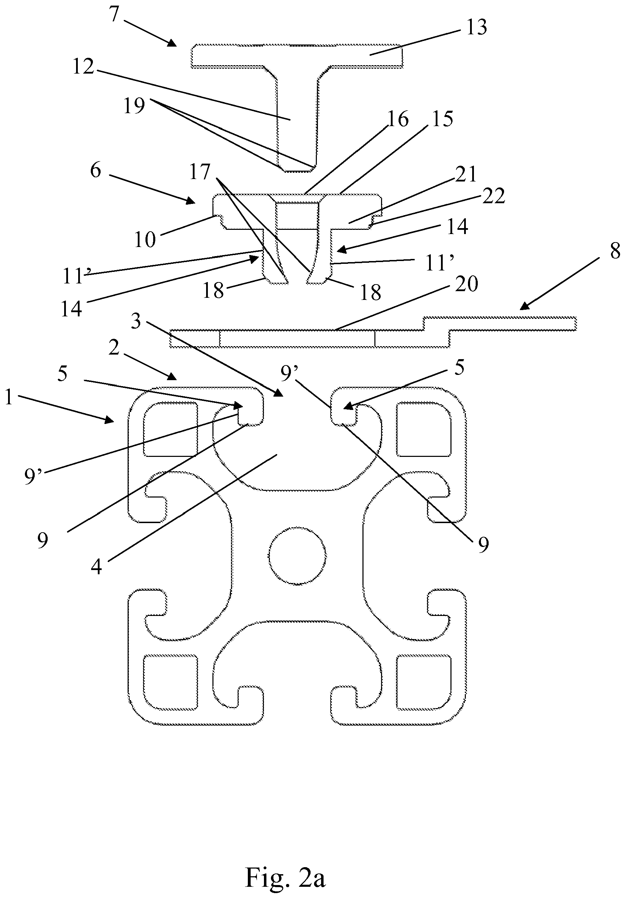

Par ailleurs, le chapeau 15 peut en outre être traversé par une ouverture de passage 16 débouchant entre les ailes d'ancrage 14 et permettant, à l'état d'insertion, le passage et l'engagement de l'élément de sollicitation et de verrouillage 12 entre lesdites ailes d'ancrage 14 de sorte que celui-ci exerce une force de pression sur au moins une zone de contact 17 de chaque aile d'ancrage 14 tendant à écarter lesdites ailes l'une de l'autre en les pressant chacune contre l'un desdits angles saillants, ce qui a pour effet de déformer leur partie d'extrémité libre, dont la déformation élastique ou plastique de la matière forme alors lesdits moyens d'ancrage et de serrage 11 (figure 2 b).

On comprendra alors que la déformation de la matière de chaque aile d'ancrage 14 peut alors former un bourrelet de matière qui vient s'ancrer sous ledit rebord 5, c'est-à-dire contre la face interne du rebord située en regard du fond de la rainurée et/ou contre l'angle saillant interne dudit rebord de sorte à réaliser le serrage de chaque rebord 5 entre la surface de serrage 10 et les moyens d'ancrage et de serrage 11 formés par lesdits bourrelets ou déformation de matière, en vue de fixer ce dernier au point de fixation choisi de la rainure par serrage, avec blocage, de l'ensemble de serrage 6 sur les rebords 5 .

Dans une forme de réalisation préférentielle, la pièce de serrage 6 peut présenter un profil globalement en forme de π, dont les deux branches verticales du π peuvent constituer les deux ailes d'ancrage 14 et la branche horizontale du π peut constituer le chapeau 15 qui peut présenter une forme de plaque ou de plateau et dont l'une des grandes faces ou face interne du chapeau peut former, au moins en partie, la surface de serrage 10.

On comprendra que la surface de serrage 10 pourra s'étendre sensiblement perpendiculairement par rapport auxdites ailes d'ancrage 14 qui pourront être fixées sur la face interne du chapeau intégrant ladite surface de serrage 10.

D'autre part, selon la présente invention, la surface de serrage 10 peut être continue ou réalisée par une pluralité de surfaces de serrage s'étendant sensiblement dans un même plan ou une même surface sensiblement plane.

Chaque aile d'ancrage 14 peut présenter une forme globalement parallélépipédique rectangle et peut s'étendre sensiblement parallèlement à l'autre aile d'ancrage 14. En outre, chaque aile d'ancrage 14 peut présenter deux côtés opposés à savoir un côté interne faisant face à l'un des côtés de l'autre aile d'ancrage 14 et un côté externe opposé audit côté interne. D'autre part, chaque côté interne d'une aile d'ancrage 14 peut présenter une surface incurvée vers le côté interne de l'autre aile d'ancrage 14 de sorte à former l'une des zones de contact 17. D'autre part encore, le côté externe de chaque aile d'ancrage 14 peut constituer, le cas échéant, au moins en partie, l'une des deux faces de butée 11'.

De façon équivalente, chaque côté interne d'une aile d'ancrage 14 peut présenter une surface présentant toute déformation ou toute courbe permettant de coopérer avec l'élément de sollicitation et de verrouillage 12 en vue d'écarter les ailes d'ancrage 14 pour exercer une pression sur chaque rebord 5 par lesdites ailes.

Ainsi, la pièce de serrage 6 peut être bloquée efficacement dans la rainure par serrage sur les rebords 5 pris chacun entre la surface de serrage 10 et les moyens d'ancrage et de serrage 11 ainsi déformés et par butée de chaque face de butée 11' contre la seconde face interne 9' du rebord 5 correspondant, tout en étant verrouillée en position de serrage grâce à la pièce de verrouillage 7 qui assure le maintien en pression d'ancrage et de serrage des ailes d'ancrage 14 contre les rebords 5 et, le cas échéant, le maintien en pression et en butée de ces dernières contre les secondes faces internes 9' desdits rebords 5.

En outre, si on se réfère notamment aux figures 3 à 5, on peut voir que le bord 18 de l'extrémité libre de chaque aile d'ancrage 14 peut être biseauté ou chanfreiné de manière à permettre, d'une part, de faciliter l'introduction ou l'insertion de la pièce de serrage 6 dans la rainure 3, 4 concernée et, d'autre part, de faciliter la déformation élastique ou plastique de la matière susceptible de former les moyens d'ancrage et de serrage 11. De tels bords 18 biseautés ou chanfreinés permettent également de diminuer la masse de la matière et donc de réduire le coût de fabrication de la pièce de serrage 6.

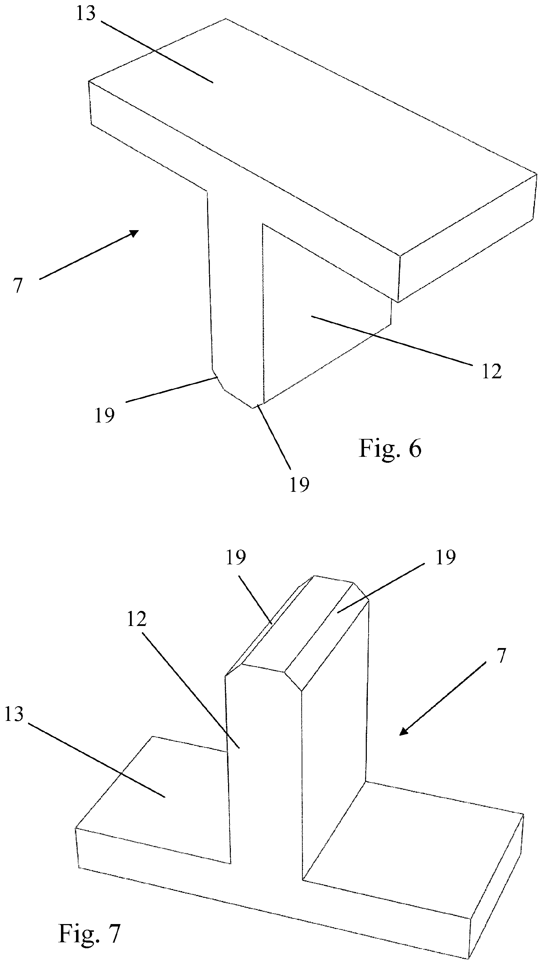

Dans une forme préférentielle de la pièce de verrouillage 7, celle-ci peut présenter un profil en forme de T, dont la branche verticale du T peut constituer l'élément de sollicitation et de verrouillage 12, tandis que la branche horizontale du T peut constituer les moyens de préhension 13 (figures 6 et 7).

On peut voir également sur les figures 6 et 7 que l'élément de sollicitation et de verrouillage 12 de la pièce de verrouillage 7 peut présenter une forme globalement parallélépipédique rectangle et peut comporter à son bord d'extrémité libre un biseau 19 de sorte à faciliter l'introduction ou l'engagement dudit élément de sollicitation et de verrouillage 12 dans l'ouverture de passage 16 de la pièce de serrage 6 qui peut également comporter un bord d'entrée d'ouverture biseauté ou chanfreiné.

Dans le cas où les moyens de raccordement sont rapportés, ceux-ci peuvent consister en une pièce de raccordement 8 susceptible d'être bloquée par serrage entre la surface de serrage 10 et la face rainurée 2 et la pièce de raccordement 8 peut être traversée par une lumière 20 permettant, à l'état d'insertion, le passage des ailes d'ancrage 14 et de l'élément de sollicitation 12 en vue de son engagement entre lesdites ailes 14, ce de sorte à bloquer ladite pièce ou partie de raccordement par coincement et serrage entre la surface de serrage 10 et ladite face rainurée (figure 2b). Dans une forme de réalisation préférentielle de la pièce de raccordement 8, celle-ci peut présenter globalement la forme d'une plaque ou d'une platine traversée par la lumière 20 (figures la, 1b, 2a, 2b et 10).

En outre, la présente invention peut prévoir que la pièce de serrage 6 comporte un moyen d'emboîtement et de centrage 21, 22 apte à être inséré dans la lumière 20 de la pièce ou partie de raccordement 8 (figure 2b).

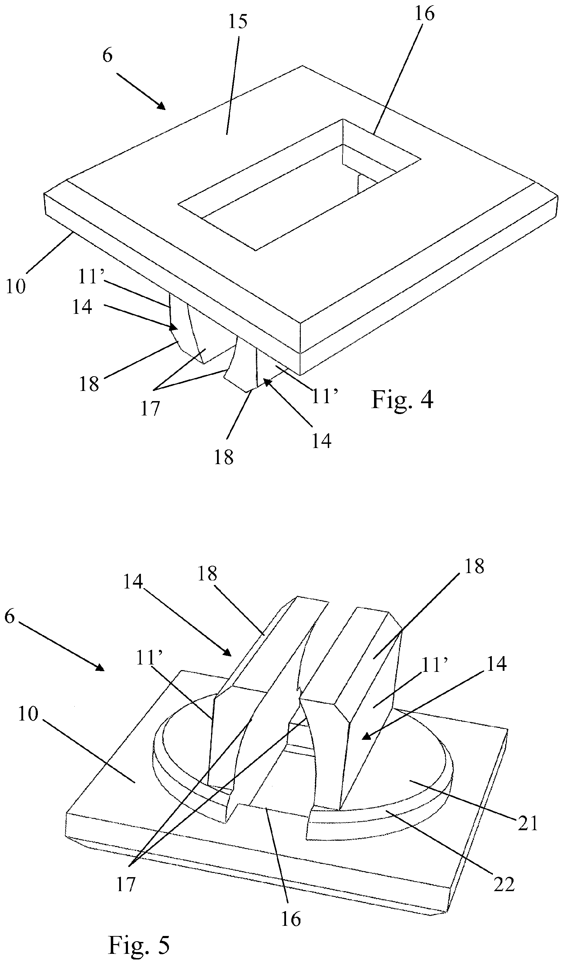

Le moyen d'emboîtement et de centrage 21, 22 peut être constitué par une surépaisseur de la surface de serrage 10, cette dernière pouvant s'étendre autour de ladite surépaisseur. En outre la surépaisseur peut être traversée par l'ouverture de passage 16 et les ailes d'ancrage 14 peuvent être fixées sur ladite surépaisseur de part et d'autre de ladite ouverture de passage 16 et, de préférence, à proximité de cette dernière (figure 3 et figure 5).

Le moyen d'emboîtement et de centrage 21, 22 peut comporter un bord chanfreiné 22 de sorte à faciliter son engagement dans la lumière 20 de la pièce ou partie de raccordement 8.

Dans le cas où les moyens de raccordement sont intégrés dans la pièce de serrage 6, ceux-ci peuvent consister en une partie de raccordement 6' munie d'un élément de raccordement tel que, par exemple, un crochet 6" (figures 8 et 9).

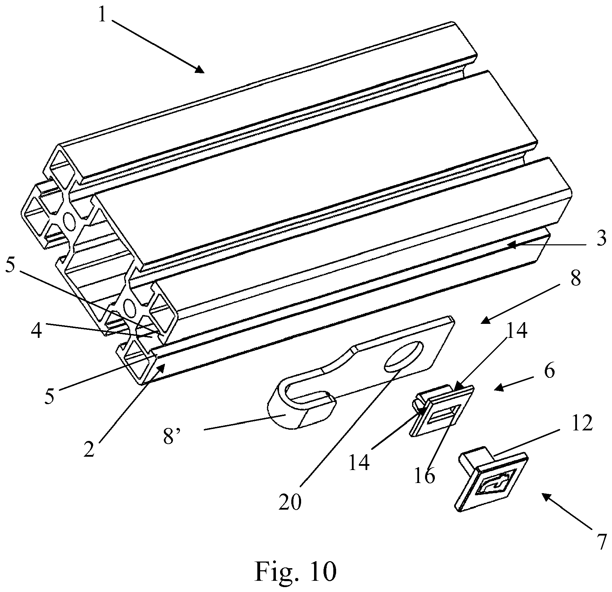

Le cas échéant, dans le cas où les moyens de raccordement sont rapportés et consistent en une pièce de raccordement 8 susceptible soit d'être fixée sur la pièce de serrage 6, par exemple par soudage ou vissage, soit d'être bloquée par serrage comme vue précédemment, la pièce de raccordement 8 peut être munie d'un élément de raccordement tel que, par exemple, un crochet 8' (figure 10) (figures la, 1b, 2a et 2b).

On notera que la pièce de raccordement 8 ou autre moyen de raccordement rapporté peut être intégré(e) dans l'objet.

De préférence l'ouverture 16 peut présenter une section, par exemple rectangulaire, sensiblement identique et de dimensions légèrement supérieures, à celles de l'élément de sollicitation et de verrouillage 12, par exemple de forme parallélépipédique rectangle.

La présente invention a également pour objet un dispositif de fixation pour système permettant la fixation d'un objet sur un élément 1 à rainure(s) de fixation, plus particulièrement un profilé à rainure(s) de fixation.

Conformément à la présente invention, ledit dispositif de fixation consiste en un dispositif de fixation tel que défini dans le système selon la présente invention.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Système permettant la fixation d'un objet sur un élément (1) à rainure(s) de fixation présentant au moins une face rainurée (2) comprenant au moins une rainure (3, 4) de fixation, dont l'embouchure (3), s'ouvrant sur une échancrure (4) pratiquée ou creusée dans ledit élément (1), est délimitée longitudinalement par deux rebords (5) en vis-à-vis, ledit système comprenant un dispositif de fixation (6, 7) servant à la fixation de l'objet sur ledit élément (1), ledit élément (1) et des moyens de raccordement (6' ; 8) avec l'objet associés audit dispositif, chaque rebord (5) comprenant un angle saillant interne formé par deux faces internes (9) et (9'), ledit dispositif comprenant un ensemble de serrage (6) et des moyens de verrouillage (7) aptes à être, au moins en partie, insérés dans ladite rainure directement en n'importe quel point de fixation le long de cette dernière, ledit ensemble, d'une part, comprenant une surface de serrage (10) apte à venir, à l'état d'insertion, en butée, directement ou indirectement, contre ladite face rainurée et, d'autre part, étant au moins en partie déformable élastiquement ou plastiquement de sorte à former des moyens d'ancrage et de serrage (11) issus de la déformation élastique ou plastique de la matière sous l'effet d'une sollicitation de pression exercée, à l'état d'insertion, par lesdits moyens de verrouillage sur ledit ensemble, lesdits moyens d'ancrage et de serrage (11) étant aptes à venir s'ancrer sous lesdits rebords (5) et/ou contre lesdits angles saillants internes de sorte à serrer lesdits rebords entre la surface de serrage (10) et les moyens d'ancrage et de serrage (11) pour assujettir ledit ensemble au point de fixation choisi, lesdits moyens de raccordement (6'; 8) étant soit intégrés dans la pièce de serrage (6), soit rapportés en étant susceptibles d'être fixés sur ledit ensemble ou bloqués par serrage entre lesdites surface de serrage (10) et face rainurée (2), l'ensemble de serrage (6) consistant en une pièce de serrage monobloc et/ou lesdits moyens de verrouillage (7) consistant en une pièce de verrouillage monobloc,
système **caractérisé en ce que** l'angle saillant interne de chaque rebord (5) est formé par une première face interne (9) s'étendant, du côté du fond de la rainure, sensiblement parallèlement à ladite face rainurée et une seconde face interne (9') s'étendant, au niveau de l'embouchure de la rainure, de préférence sensiblement perpendiculairement à ladite première face interne, et **en ce que** la pièce de serrage (6) comprend deux faces de butée (11') susceptibles de venir chacune, à l'état d'insertion, en butée, avec maintien en pression par ladite pièce de verrouillage (7) contre la seconde face interne (9') de l'un des rebords (5) sous l'effet de ladite sollicitation, ce de façon à verrouiller la pièce de serrage et à empêcher, du fait du maintien en pression, notamment son glissement le long de la rainure.

2. Système, selon la revendication 1, caractérisé en que la pièce de verrouillage (7) comprend un élément de sollicitation et de verrouillage (12) apte à assurer la contrainte de verrouillage et, éventuellement, des moyens de préhension (13) de cette dernière et en ce que la pièce de serrage (6) comprend, d'une part, deux ailes d'ancrage (14) flexibles espacées et situées sensiblement en regard l'une de l'autre et adaptées de sorte, à l'état d'insertion, à s'étendre sensiblement jusqu'au niveau ou au-delà des angles saillants desdits rebords (5) vers le fond de ladite rainure, chaque aile d'ancrage (14) étant au moins déformable élastiquement ou plastiquement à sa partie d'extrémité libre et, d'autre part, un chapeau (15) intégrant la surface de serrage (10) et supportant lesdites ailes d'ancrage (14), ledit chapeau (15) étant en outre traversé par une ouverture de passage (16) débouchant entre lesdites ailes d'ancrage (14) et permettant, à l'état d'insertion, le passage et l'engagement de l'élément de sollicitation et de verrouillage (12) entre lesdites ailes d'ancrage (14) de sorte que celui-ci exerce une force de pression sur au moins une zone de contact (17) de chaque aile d'ancrage (14), tendant à écarter lesdites ailes l'une de l'autre en les pressant chacune contre l'un desdits angles saillants, ce qui a pour effet de déformer leur partie d'extrémité libre, dont la déformation élastique ou plastique de la matière forme alors lesdits moyens d'ancrage et de serrage (11).

3. Système, selon la revendication 2, **caractérisé en ce que** la pièce de serrage (6) présente un profil globalement en forme de π, dont les deux branches verticales du π constituent les deux ailes d'ancrage (14) et la branche horizontale du π constitue le chapeau (15) qui présente une forme de plaque ou de plateau et dont l'une des grandes faces ou face interne dudit chapeau forme, au moins en partie, la surface de serrage (10).

4. Système, selon l'une quelconque des revendications 2 à revendication 3, **caractérisé en ce que** chaque aile d'ancrage (14) présente une forme globalement parallélépipédique rectangle et s'étend sensiblement parallèlement à l'autre aile d'ancrage (14), chaque aile d'ancrage (14) présentant deux côtés opposés à savoir un côté interne faisant face à l'un des côtés de l'autre aile d'ancrage (14) et un côté externe opposé audit côté interne et en ce chaque côté interne d'une aile d'ancrage (14) présente une surface incurvée vers le côté interne de l'autre aile d'ancrage (14) de sorte à former l'une des surfaces de contact (17) et **en ce que** le côté externe de chaque aile d'ancrage (14) constitue au moins en partie, l'une des deux faces de butée (11').

5. Système, selon la revendication 4, **caractérisé en ce que** le bord (18) de l'extrémité libre de chaque aile d'ancrage (14) est biseauté ou chanfreiné.

6. Système, selon l'une quelconque des revendications 1 à 5, **caractérisé en ce que** la pièce de verrouillage (7) présente un profil en forme de T, dont la branche verticale du T constitue l'élément de sollicitation et de verrouillage (12), tandis que la branche horizontale du T constitue les moyens de préhension (13).

7. Système, selon l'une quelconque des revendications 2 à 6, **caractérisé en ce que** les moyens de raccordement sont rapportés et consistent en une pièce de raccordement (8) susceptible d'être bloquée par serrage entre lesdites surface de serrage (10) et face rainurée (2) et **en ce que** ladite pièce de raccordement (8) est traversée par une lumière (20) permettant, à l'état d'insertion, le passage des ailes d'ancrage (14) et de l'élément de sollicitation et de verrouillage (12) en vue de son engagement entre lesdites ailes (14), ce de sorte à bloquer ladite pièce ou partie de raccordement par coincement et serrage entre la surface de serrage (10) et ladite face rainurée.

8. Système, selon la revendication 7 **caractérisé en ce que** la pièce de raccordement (8) présente globalement la forme d'une plaque ou d'une platine traversée par la lumière (20) et **en ce que** la pièce de serrage (6) comporte un moyen d'emboîtement et de centrage (21, 22) apte à être inséré dans ladite lumière (20).

9. Système, selon la revendication 8, **caractérisé en ce que** le moyen d'emboîtement et de centrage (21, 22) est constitué par une surépaisseur de la surface de serrage (10), cette dernière s'étendant autour de ladite surépaisseur et **en ce que** ladite surépaisseur est traversée par l'ouverture de passage (16), les ailes d'ancrage (14) étant fixées sur ladite surépaisseur de part et d'autre de ladite ouverture de passage (16) et, de préférence, à proximité de cette dernière.

10. Système, selon la revendication 8 ou la revendication 9, **caractérisé en ce que** le moyen d'emboîtement et de centrage (21, 22) comporte un bord chanfreiné (22) de sorte à faciliter son engagement dans la lumière (20) de la pièce de raccordement (8).

11. Système, selon l'une quelconque des revendications 1 à 10, **caractérisé en ce que** les moyens de raccordement sont intégrés dans la pièce de serrage (6) et consistent en une partie de raccordement (6') munie d'un élément de raccordement, tel que par exemple un crochet (6") ou, le cas échéant, les moyens de raccordement sont rapportés et consistent en une pièce de raccordement (8) telle que définie dans les revendications 4 à 7 ou en une pièce de raccordement susceptible d'être fixée sur la pièce d'assemblage (6), ladite pièce de raccordement (8) étant munie d'un élément de raccordement, tel que par exemple un crochet (8').

## Patentansprüche

1. System zum Befestigen eines Objekts an einem Element (1) mit Befestigungsnute(n), mit mindestens einer Nuten aufweisenden Begrenzungsfläche (2), welche mindestens eine Befestigungsnut (3,4) aufweist, deren Öffnung (3) sich zu einer Einziehung (4) hin öffnet, die in das Element (1) eingeformt ist oder spanend in diesem erzeugt ist und in Längsrichtung durch zwei einander gegenüberliegende Ränder (5) begrenzt ist, wobei das System eine Befestigungsvorrichtung (6,7), die dazu dient, das Objekt auf dem Element (1) zu befestigen, das Element (1) und der Befestigungsvorrichtung zugeordnete Verbindungsmittel (6'; 8) zur Verbindung mit dem Objekt umfasst, wobei jeder Rand (5) einen innenliegenden vorspringenden Winkel umfasst, welcher durch zwei innenliegende Flächen (9) und (9') gebildet ist, wobei die Befestigungsvorrichtung eine Klemmeinheit (6) und Verriegelungsmittel (7) aufweist, die an einem in Längserstreckung der Nut beliebigen Befestigungspunkt zumindest teilweise direkt in die Nut eingeführt werden können, wobei die Klemmeinheit einerseits eine Klemmfläche (10) aufweist, die geeignet ist, im eingeführten Zustand mittelbar oder unmittelbar an der Begrenzungsfläche zur Anlage zu kommen, und andererseits zumindest teilweise elastisch oder plastisch verformbar sind, derart, dass Verankerung- und Klemmmittel (11) erhalten werden, die ihren Ursprung in der elastischen oder plastischen Verformung des Materiales unter dem Einfluss einer im eingeführten Zustand durch die Verriegelungsmittel auf die Klemmeinheit ausgeübten Vorspannkraft haben, wobei die Verriegelungsmittel der Befestigungsvorrichtung und die Verankerungs-und Klemmmittel (11) geeignet sind, sich an den Rändern (5) und/oder der an den genannten vorspringenden inneren Winkeln derart zu verankern, dass sie die Ränder zwischen der Klemmfläche (10) und den Verankerung-und Klemmmittel (11) einspannen, um die Befestigungsvorrichtung am gewählten Befestigungspunkt festzulegen, wobei die Verbindungsmittel (6'; 8) in das Klemmstück (6) integriert sind oder an dieses angesetzt sind, wobei sie entweder auf der Befestigungsvorrichtung angeordnet sind oder durch Verklemmen zwischen der Klemmfläche (10) und der Nuten aufweisende Begrenzungsfläche (2) blockiert sind, wobei die Klemmeinheit aus einem einstückigen Klemmteil bestehen kann und/oder die Verriegelungsmittel (7) aus einem einstückigen Verriegelungsstück bestehen,
**dadurch gekennzeichnet, dass** der innen liegende vorspringende Winkel jedes Randes (5) durch eine erste innen liegende Fläche (9) gebildet ist, die sich auf der Bodenseite der Nut im Wesentlichen parallel zu der Nuten aufweisenden Begrenzungsfläche erstreckt, und eine zweite innen liegende Fläche (9') aufweist, die sich auf Höhe der Öffnung der Nut erstreckt, vorzugsweise im Wesentlichen senkrecht zu der der genannten ersten inneren Fläche, und dass das Klemmstück (6) zwei Anschlagflächen (11') aufweist, von denen jede im eingesetzten Zustand unter Aufrechterhaltung von Druck auf das Verriegelungsteil (7) unter der angesprochenen Vorspannkraft in Anlage an die zweite innen liegende Fläche (9') des einen der Ränder (5) kommen kann, derart, dass das Verriegelungsteil verriegelt wird und unter der aufrecht erhaltenen Druckkraft insbesondere verhindert wird, dass es in Längsrichtung der Nut verschoben wird.

2. System nach Anspruch 1, **dadurch gekennzeichnet, dass** das Verriegelungsteil (7) ein Vorspann- und Verriegelungselement (12) aufweist, welches die Verriegelungs-Vorspannung bereitstellt, und gegebenenfalls Greifmittel (13) des letzteren aufweist, und dass das Klemmstück (6) einerseits zwei Verankerungsflügel (14) aufweist, die flexibel sind, beabstandet sind und im Wesentlichen einander gegenüberliegend angeordnet sind und so ermöglichen, sich im eingesetzten Zustand im Wesentlichen bis zu der Stelle zu erstrecken, jenseits der die vorspringenden Winkel der Ränder (5) gegen den Boden der Nut verlaufen, wobei jeder Verankerungsflügel (14) zumindest in seinem Endabschnitt elastisch oder plastisch verformbar ist und anderseits eine Kappe (15) aufweist, die die Klemmfläche (10) integral enthält und die Verankerungsflügel (14) trägt, wobei die Kappe (15) zusätzlich eine Durchgangsöffnung (16) aufweist, die zwischen den Verankerungsflügeln (14) ausmündet und im eingesetzten Zustand das Hindurchbewegen und das Berühren des Vorspann-und Verriegelungselementes (12) zwischen den beiden Flügeln (14) ermöglicht, derart dass letzteres eine Druckkraft auf mindestens eine Kontaktzone (17) jedes der Verankerungsflügel (14) ausübt, welche die genannten Flügel auseinander zu bewegen sucht indem sie jeden dieser Flügel gegen einen der genannten vorspringenden Winkel drückt, was zur Folge hat, dass der Abschnitt des freien Endes derselben verformt wird, dessen elastisch oder plastisch erfolgte Materialverformung somit die Verankerungs-und Klemmmittel (11) bildet.

3. System nach Anspruch 2, **dadurch gekennzeichnet, dass** das Klemmstück (6) ein Profil aufweist, welches insgesamt n-förmig ist wobei die beiden vertikalen Arme des π die beiden Verankerungsflügel (14) bilden und der horizontale Arm des π die Kappe (15) bildet, welche die Form einer Platte oder eines Plateaus hat, wobei eine der großen Flächen oder eine innenliegende Fläche der Kappe zumindest teilweise die Klemmfläche (10) bildet.

4. System nach einem der Ansprüche 2 bis 3, **dadurch gekennzeichnet, dass** jeder der Verankerungsflügel (14) im Wesentlichen die Form eines rechteckigen Parallelepipeds hat und sich parallel zum anderen Verankerungsflügel (14) erstreckt, wobei er zwei einander gegenüberliegende Seiten aufweist, nämlich eine innere Seite, die der einen Seite des anderen Verankerungsflügels (14) gegenüberliegt, und eine außen liegende Seite, die der innen liegenden Seite gegenüber liegt, und dass jede innere Seite eines Verankerungsflügels (14) eine einwärts gekrümmte Oberfläche hat, die zur Innenseite des anderen Verankerungsflügels (14) läuft, derart, dass eine der Berührflächen (17) gebildet wird, und dass die außen liegende Seite eines jeden Verankerungsflügels (14) zumindest teilweise eine der beiden Anschlagflächen (11') bildet.

5. System nach Anspruch 4, **dadurch gekennzeichnet, dass** der Rand (18) des freien Endes eines jeden der Verankerungsflügel (14) abgeschrägt oder angefast ist.

6. System nach einem der Ansprüche 1 bis 5, **dadurch gekennzeichnet, dass** das Verriegelungsteil (7) ein T-förmiges Profil hat, wobei der vertikale Arm des T das Vorspann-und Verriegelungselement (12) bildet, während der horizontale Arm des T ein Greifmittel (13) bildet.

7. System nach einem der Ansprüche 2 bis 6, **dadurch gekennzeichnet, dass** die Verbindungsmittel angesetzt sind und aus einem Verbindungsstück (8) bestehen, welches durch Klemmen zwischen den genannten Klemmflächen (10) und der Nuten enthaltenden Begrenzungsfläche (2) blockiert werden kann und dass sich durch das Verbindungsstück (8) eine Öffnung erstreckt, welche eingebaut ein Hindurchführen der Verankerungsflügel (14) und des Vorspann-und Verriegelungselementes (12) gestattet, so dass dieses zwischen den Verankerungsflügeln (14) hindurchgeführt werden kann, derart, dass das Verankerungsstück oder ein Teil desselben durch Verblocken oder Klemmen zwischen der Klemmfläche (10) und der Nuten enthaltenden Begrenzungsfläche blockiert wird.

8. System nach Anspruch 7, **dadurch gekennzeichnet, dass** das Verbindungsstück (8) im Wesentlichen die Form einer Platte oder einer Platine hat, durch welche sich die Öffnung (20) erstreckt, und dass das Klemmstück (6) ein Füge-und Zentriermittel (21,22) aufweist, welches in die Öffnung (20) eingeführt werden kann.

9. System nach Anspruch 8, **dadurch gekennzeichnet, dass** das Füge- und Zentriermittel (21,22) durch eine Verdickung der Klemmfläche (10) gebildet ist, wobei sich letztere um den verdickten Bereich herum erstreckt, und dass der verdickte Bereich eine hindurchgehende Passageöffnung (16) aufweist, wobei die Verankerungsflüge (14) auf dem verdickten Bereich auf der einen und der anderen Seite der Passageöffnung (16) eingeordnet sind, und zwar vorzugsweise in der Nähe der letzteren.

10. System nach Anspruch 8 oder Anspruch 9, **dadurch gekennzeichnet, dass** das Füge- und Zentriermittel (21,22) einen abgeschrägten Rand (22) aufweist, derart, dass sein Einführen in die Öffnung (20) des Verbindungsstückes (8) erleichtert ist.

11. System nach einem der Ansprüche 1 bis 10, **dadurch gekennzeichnet, dass** die Verbindungsmittel in das Klemmstück (6) integriert sind und ein Verbindungsteil (6') aufweisen, das ein Verbindungselement aufweist, wie zum Beispiel einen Haken (6''), oder dass gegebenenfalls auch die Verbindungsmittel angesetzt sind und ein Verbindungsteil (8) aufweisen, wie es in den Ansprüchen 4-7 angegeben ist, oder auch ein einstückiges Verbindungsstück umfassen, welches auf dem Montagestück (6) fixiert werden kann, wobei das Verbindungsteil (8) mit einem Verbindungselement versehen ist, wie zum Beispiel einem Haken (8').

## Claims

1. System enabling the attachment of an object to an element (1) with attachment slot(s) having at least one slotted face (2) including at least one attachment slot (3, 4), the mouth (3) of which, opening out onto a notch (4) formed in or hollowed out of said element (1), is delimited lengthwise by two facing rims (5), said system comprising an attachment device (6, 7) used to attach the object to said element (1), said element (1) and means (6'; 8) for connection with the object associated with said device, each rim (5) having an internal projecting corner formed by two internal faces (9) and (9'), said device having a clamping assembly (6) and locking means (7) designed to be at least partially inserted into said slot directly at any attachment point along this latter, said assembly firstly comprising a clamping surface (10) designed, in the inserted state, to butt directly or indirectly against said slotted face, and secondly being at least partially elastically or plastically deformable such as to form anchoring and clamping means (11) as a result of the elastic or plastic deformation of the material under the effect of pressure exerted, in the inserted state, by said locking means on said assembly, said anchoring and clamping means (11) being designed to be anchored beneath said rims (5) and/or against said internal projecting corners such as to clamp said rims between the clamping surface (10) and the anchoring and clamping means (11) to hold said assembly at the selected attachment point, said connection means (6'; 8) either being built into the clamping part (6) or attached, being liable to be attached to said assembly or locked by clamping between said clamping surface (10) and said slotted face (2), the clamping assembly (6) comprising a one-piece clamping part and/or said locking means (7) comprising a one-piece locking part, the system being **characterized in that** the internal projecting corner of each rim (5) is formed by a first internal face (9) extending, from the side of the back of the slot, substantially parallel to said slotted face and a second internal face (9') extending, near to the mouth of the slot, preferably substantially perpendicular to said first internal face, and **in that** the clamping part (6) comprises two stop faces (11') each designed, in the inserted state, to butt and to be held under pressure by said locking part (7), against the second internal face (9') of one of the edges (5) under the effect of said stressing, such as to lock the clamping part and in particular to prevent same from sliding along the slot, by means of said pressure.

2. System according to Claim 1, **characterized in that** the locking part (7) includes a stressing and locking element (12) designed to ensure the locking stress and, potentially, means (13) for gripping this latter and **in that** the clamping part (6) includes firstly two flexible anchoring flanges (14) that are spaced apart and located substantially facing one another and are designed to extend, when in the inserted state, substantially as far as or beyond the projecting corners of said rims (5) towards the back of said slot, each anchoring flange (14) being at least elastically or plastically deformable at the free end of same, and secondly a cap (15) incorporating the clamping surface (10) and holding said anchoring flanges (14), said cap (15) further being perforated by a through hole (16) opening out between said anchoring flanges (14) and enabling, in the inserted state, the stressing and locking element (12) to be passed and engaged between said anchoring flanges (14) such that same exerts a pressure on at least one contact zone (17) of each anchoring flange (14) tending to push said flanges away from one another by pressing each of same against one of said projecting corners, which causes the deformation of the free end portion of same, the elastic or plastic deformation of the material of same then forming said anchoring and clamping means (11).

3. System according to Claim 2, **characterized in that** the overall profile of the clamping part (6) is π-shaped, in which the two vertical branches of the π shape form the two anchoring flanges (14) and the horizontal branch of the π shape forms the cap (15), which is shaped like a plate or tray and in which one of the large faces or the internal face of said cap at least partially forms the clamping surface (10).

4. System according to either one of Claims 2 and 3, **characterized in that** each anchoring flange (14) has an overall rectangular parallelepiped shape and extends substantially parallel to the other anchoring flange (14), each anchoring flange (14) having two opposing sides i.e. an inner side facing one of the sides of the other anchoring flange (14) and an outer side opposite said inner side and **in that** each inner side of an anchoring flange (14) has a surface curved towards the inner side of the other anchoring flange (14) such as to form one of the contact surfaces (17) and **in that** the outer side of each anchoring flange (14) at least in part constitutes one of the two stop faces (11').

5. System according to Claim 4, **characterized in that** the edge (18) of the free end of each anchoring flange (14) is bevelled or chamfered.

6. System according to any one of Claims 1 to 5, **characterized in that** the locking part (7) has a T-shaped profile, in which the vertical branch of the T is the stressing and locking element (12) while the horizontal branch of the T forms the gripping means (13).

7. System according to any one of Claims 2 to 6, **characterized in that** the connection means are attached and comprise a connection part (8) that can be locked by clamping between said clamping surface (10) and said slotted face (2) and **in that** said connection part (8) is perforated by a hole (20) enabling, in the inserted state, the anchoring flanges (14) and the stressing and locking element (12) to pass therethrough to engage same between said flanges (14), such as to lock said part or connection portion by wedging and clamping between the clamping surface (10) and said slotted face.

8. System according to Claim 7, **characterized in that** the connection part (8) has an overall plate shape and is perforated by a hole (20) and **in that** the clamping part (6) includes fitting and centring means (21, 22) designed to be inserted in said hole (20).

9. System according to Claim 8, **characterized in that** the fitting and centring means (21, 22) are formed by an over-thickness of the clamping surface (10), this latter extending about said over-thickness and **in that** said over-thickness is perforated by the through hole (16), the anchoring flanges (14) being attached to said over-thickness on both sides of said through hole (16) and preferably close to this latter.

10. System according to Claim 8 or Claim 9, **characterized in that** the fitting and centring means (21, 22) include a chamfered edge (22) such as to facilitate the engagement of same in the hole (20) of the connection part (8).

11. System according to any one of Claims 1 to 10, **characterized in that** the connection means are built into the clamping part (6) and comprise a connection portion (6') provided with a connection element, such as a hook (6") or, where applicable, the connection means are attached and comprise a connection part (8) as defined in Claims 4 to 7 or a connection part that can be attached to the assembly part (6), said connection part (8) being provided with a connection element, such as a hook (8').
